# EUROPÄISCHE PATENTSCHRIFT

(11) **EP 3 216 677 B1**
(45) Veröffentlichungstag und Bekanntmachung des Hinweises auf die Patenterteilung: **28.08.2019**
(21) Anmeldenummer: 17159816.2
(22) Anmeldetag: 08.03.2017
(51) Int. Cl.: B62D 5/04

(54) **RADLENKBAUGRUPPE FÜR KRAFTFAHRZEUGE MIT EINZELRADLENKUNG**
WHEEL STEERING ASSEMBLY FOR MOTOR VEHICLES WITH SINGLE WHEEL STEERING
MODULE DE CONTRE-RAIL POUR VÉHICULES AUTOMOBILES COMPRENANT UNE DIRECTION INDIVIDUELLE DES ROUES

(30) Priorität: 10.03.2016 DE 102016203984
(43) Veröffentlichungstag der Anmeldung: 13.09.2017
(73) Patentinhaber: ThyssenKrupp Presta AG, 9492 Eschen (LI); thyssenkrupp AG, 45143 Essen (DE)
(72) Erfinder: Murkovic, Kristian, 7320 Sargans (CH); Gadola, Alfred, 9475 Sevelen (CH); Landis, Stefan, 8820 Wädenswil (CH); Ignjatovic, Sladjan, 9424 Rheineck (CH); Althaus, Josef, 87538 Fischen (DE)
(74) Vertreter: thyssenkrupp Intellectual Property GmbH

(56) Entgegenhaltungen:
- EP-A1- 1 669 275
- FR-A3- 2 896 471
- US-A1- 2001 054 801

## Beschreibung

Die Erfindung betrifft eine Radlenkbaugruppe für ein Kraftfahrzeug zur Verschwenkung eines einzelnen lenkbaren Fahrzeugrads, das an einem Fahrzeugchassis um eine Lenkachse schwenkbar angeordnet ist, wobei die Radlenkbaugruppe eine einen Lenkmotor aufweisende Lenkmotorvorrichtung umfasst, mit der das Fahrzeugrad um durch elektrische Steuersignale vorgegebene Drehwinkel um die Lenkachse schwenkbar ist, wobei ein Radschwenkhebel mit dem Fahrzeugrad koppelbar ist, wobei der Radschwenkhebel um die Lenkachse schwenkbar ist, und dass die Lenkmotorvorrichtung am Fahrzeugchassis befestigbar ist und einen Motorschwenkhebel aufweist, der mittels des Lenkmotors um eine Schwenkachse schwenkbar ist, und dass ein schwenkbarer Endbereich des Motorschwenkhebels und ein schwenkbarer Endbereich des Radschwenkhebels mittels einer angelenkten Koppelstange miteinander verbunden sind, so dass eine vom Lenkmotor bewirkte Verschwenkung des Motorschwenkhebels eine Verschwenkung des Radschwenkhebels bewirkt.

Bei sogenannten Steer-by-Wire Lenksystemen wird der Lenkbefehl, den der Fahrer in das Lenkrad einbringt, mittels eines Sensors detektiert und anschließend an eine Steuereinheit (ECU) weitergeleitet, wobei die Steuereinheit aus dem Lenkmoment und dem Lenkwinkel Steuersignale erzeugt, mit denen Stellmotoren der einzeln schwenkbaren Fahrzeugräder angesteuert und dadurch die lenkbaren Räder gemäß dem Wunsch des Fahrers verschwenkt werden. Bei einem derartigen Lenksystem sind die lenkbaren Räder unabhängig voneinander verschwenkbar. Sie werden daher auch als Einzelradlenkung bezeichnet.

Die unabhängige Verschwenkbarkeit ermöglicht die Programmierung von Lenkwinkelkombinationen, die besser an extreme Fahrsituationen angepasst sind als dies mit herkömmlichen mechanischen Lenksystemen möglich wäre.

Aus der DE 10 2008 03 95 47 A1 ist eine Einzelradlenkung bekannt, die auf einem das Fahrzeugrad tragenden Querlenker angebracht ist. Die bekannte Lenkvorrichtung ist kompliziert aufgebaut und erfordert einen relativ großen Bauraum. Aus der KR 10 2011 005 286 0 A1 ist ebenfalls eine Einzelradlenkung bekannt, bei der ein Linearantrieb zum Einsatz kommt, der über ein kompliziertes Gestänge mit dem zu lenkenden Fahrzeugrad verbunden ist. Nachteilig an diesem bekannten Lenksystem ist der große Aufwand für den Linearantrieb und das Gestänge.

Aus der US 2001/054801 A1 ist eine Einzelradlenkung der eingangs genannten Art bekannt. Nachteilig daran ist, dass Relativbewegungen des einfedernden Fahrzeugrades gegenüber der am Fahrzeugchassis fest angebrachten Lenkmotorvorrichtung nicht möglich sind. Es besteht die Gefahr, dass sich die Koppelstange gegenüber den Schwenkhebeln beim Einfedern des Fahrzeugrades verkantet oder sich gar verbiegt.

Das Dokument FR2896471 wird als nächstliegender Stand der Technik angesehen und offenbart eine Radlenkbaugruppe gemäß dem Oberbegriff des Anspruchs 1.

Aufgabe der Erfindung ist es, eine Radlenkbaugruppe für ein Einzelradlenksystem anzugeben, das einen einfachen und platzsparenden Aufbau aufweist, große Lenkwinkel ermöglicht und kostengünstig herstellbar ist, und schädliche Belastungen der Koppelstange beim Einfedern des Fahrzeugrades verringert.

Die Aufgabe wird durch die Merkmale des Patentanspruchs 1 gelöst. Vorteilhafte Weiterbildungen ergeben sich aus den Unteransprüchen.

Die erfindungsgemäße Lösung sieht vor, dass die Koppelstange am Motorschwenkhebel und am Radschwenkhebel jeweils mittels eines Kugelgelenks angelenkt ist.

In weiterer Ausgestaltung der Erfindung ist vorgesehen, dass die Koppelstange am Motorschwenkhebel und am Radschwenkhebel jeweils mittels eines Kugelgelenks angelenkt ist, um Relativbewegungen des einfedernden Fahrzeugrades gegenüber der am Fahrzeugchassis fest angebrachten Lenkmotorvorrichtung zu ermöglichen. Durch diese Maßnahme wird sichergestellt, dass sich die Koppelstange gegenüber den Schwenkhebeln beim Einfedern des Fahrzeugrades nicht verkantet oder sich gar verbiegt.

Die erfindungsgemäße Anordnung erlaubt eine sehr kompakte Bauweise bei größtmöglichen Lenkwinkeln von bevorzugt zwischen -70° bis +90°. Durch die Befestigung der Lenkmotorvorrichtung am Fahrzeugchassis gehört diese zusammen mit dem Fahrzeugchassis zu den gefederten Massen des Fahrzeugs und trägt mit Vorteil nicht zu den ungefederten Massen am Fahrzeugrad bei. Hierdurch wird der Fahrbahnkontakt des Fahrzeugrades bei sehr unebenen Straßen verbessert.

Das Fahrzeugrad umfasst bevorzugt eine Felge und einen Reifen.

Bevorzugt kann vorgesehen sein, dass das Fahrzeugrad auf seiner dem Fahrzeugchassis zugewandten Innenseite mit einem Radschwenkhebel versehen ist, mit dem es um die Lenkachse schwenkbar ist, dass die Lenkmotorvorrichtung gegenüber der Innenseite des Fahrzeugrades am Fahrzeugchassis befestigt ist und einen Motorschwenkhebel aufweist, der mittels des Lenkmotors um eine parallel zur Lenkachse ausgerichtete Schwenkachse schwenkbar ist, und dass ein schwenkbarer Endbereich des Motorschwenkhebels und ein schwenkbarer Endbereich des Radschwenkhebels mittels einer angelenkten Koppelstangen miteinander verbunden sind, sodass eine vom Lenkmotor bewirkte Verschwenkung des Motorschwenkhebels eine Verschwenkung des Radschwenkhebels bewirkt.

In einer bevorzugten Ausführungsform weist die Lenkmotorvorrichtung ein wirkungsmäßig zwischen dem Lenkmotor und dem Motorschwenkhebel angeordnetes Untersetzungsgetriebe auf. Elektromotoren sind kompakt und kostengünstig. Zur Erzeugung eines für die Verschwenkung des gelenkten Fahrzeugrades erforderlichen Drehmoments ist ein Untersetzungsgetriebe vorgesehen.

Vorzugsweise ist das Untersetzungsgetriebe ein Wolfrom Getriebe oder ein Wellgetriebe, ein Riemengetriebe oder ein Planetenradgetriebe. Diese Getriebearten sind kompakt und einfach aufgebaut und benötigen wenig Einbauraum.

Durch die Maßnahme, dass sich der Motorschwenkhebel und der Radschwenkhebel von ihren jeweiligen Schwenkachsen ausgehend im Wesentlichen parallel zueinander und bei neutraler Lenkstellung bei Geradeausfahrt des Fahrzeugs im Wesentlichen in Fahrtrichtung oder entgegen der Fahrtrichtung erstrecken, werden größtmögliche Lenkwinkel von -70° bis +90° ermöglicht. Diese Anordnung wird auch als Gelenkviereck bezeichnet.

Unter im Wesentlichen parallel wird eine Abweichung des Raumwinkels von ±10° gegenüber dem Idealfall verstanden.

Ein Ausführungsbeispiel Erfindung wird nachfolgend anhand der Zeichnungen näher erläutert.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren zeigen im Einzelnen:
- Figur 1:: eine erfindungsgemäße Radlenkbaugruppe, die über eine elektronische Steuereinheit mit einer Lenkradbaugruppe elektrisch verbunden ist;
- Figur 2:: eine perspektivische Ansicht einer erfindungsgemäßen Radlenkbaugruppe in einer schematischen Darstellung;
- Figur 3:: eine Draufsicht auf die Hinterseite derselben Radlenkbaugruppe;
- Figur 4:: ein vergrößertes Detail derselben Radlenkbaugruppe;
- Figur 5:: eine Draufsicht auf die Oberseite derselben Radlenkbaugruppe bei neutraler Lenkstellung;
- Figur 6:: Radlenkbaugruppe wie in Figur 5, aber mit nach rechts eingeschlagenem Fahrzeugrad;
- Figur 7:: die Radlenkbaugruppe von Figur 5, aber mit nach links eingeschlagenem Fahrzeugrad.

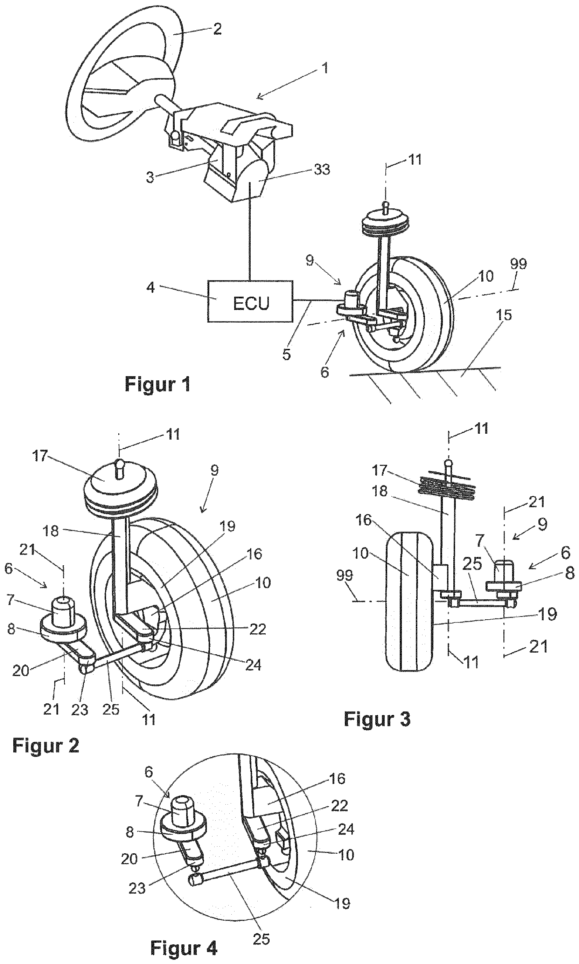

Figur 1 zeigt das Funktionsprinzip eines Steer-by-Wire Lenksystems, bei dem in einer Lenkradvorrichtung 1, auch als Lenksäule bezeichnet, die Drehbewegung eines Lenkrads 2 mittels eines Drehgebers 3 erfasst wird und daraus elektrische Signale generiert werden. Die Drehbewegung setzt sich aus dem durch den Fahrer eingetragene Lenkmoment und dem Lenkradwinkel zusammen.

Der Drehgeber 3 ist innerhalb eines Gehäuses eines Handmomentenstellers 33, auch Feedback-Aktuator genannt, angeordnet. Dieser Handmomentensteller 33 umfasst einen Elektromotor, der mit der Lenkwelle wirkverbunden ist und dazu dient, dem Fahrer über das Lenkrad 2 Drehmomente zu übermitteln, die dem Fahrgefühl einer konventionellen Lenkung entsprechen. Diese Drehmomente sind zum Beispiel Trägheitsmomente, Rückstellmomente oder auch Rückwirkungsmomente, die aus Fahrbahneinflüssen und der Lenkkinematik herrühren. Ohne diese am Lenkrad spürbaren Drehmomente ist ein sicheres Führen des Kraftfahrzeugs durch den Fahrer erschwert.

Der Drehgeber 3 ist elektrisch mit einer elektronischen Steuereinheit 4 verbunden (Electronic Control Unit = ECU), die unter anderem noch weitere Signale wie beispielsweise Fahrzeuggeschwindigkeit oder die Werte aus Beschleunigungssensoren berücksichtigt und daraus für jedes gelenkte Rad separat einen optimalen Lenkwinkel berechnet. Dieser Lenkwinkel wird in elektrischen Steuersignalen codiert, die über eine Steuerleitung 5 an eine Lenkmotorvorrichtung der jeweiligen Radlenkbaugruppe 9 weitergeleitet wird, um ein Fahrzeugrad 10 um eine als Schwenkachse ausgebildete Lenkachse 11 im vorgegebenen Drehwinkel 12, 13, 14 zu verschwenken. Daraufhin rollt das Fahrzeugrad 10, wenn sich das Fahrzeug bewegt, auf einem Untergrund 15, beispielsweise einer Straße, in die vom Fahrer über das Lenkrad 2 vorgegebene Richtung.

Der Aufbau einer erfindungsgemäßen Radlenkbaugruppe 9 ist in den Figuren 2 - 4 erkennbar. Eine Nabenbaugruppe 16 enthält unter anderem ein nicht gezeigtes Radlager für das Fahrzeugrad 10 und eine nicht gezeigte Radbremse. Die Nabenbaugruppe 16 ist um die Lenkachse 11 schwenkbar mittels einer Befestigungsvorrichtung 17 am nicht gezeigten Fahrzeugchassis befestigt, wobei das Fahrzeugrad 10 mit der Nabenbaugruppe 16 mittels eines Federbeins 18 gegenüber dem Fahrzeugchassis gefedert ist und parallel zur Lenkachse 11 ein- und ausfedern kann. Die Befestigungsvorrichtung 17 ist als MacPherson-Federbein ausgebildet. Es ist aber ebenfalls denkbar und möglich, die erfindungsgemäße Radlenkbaugruppe 9 in Kombination mit einer Doppelquerlenker-Befestigungsvorrichtung einzusetzen.

Die Lenkmotorvorrichtung 6 hingegen ist gegenüber der Innenseite 19 des Fahrzeugrades 10 direkt fest am Fahrzeugchassis befestigt und nimmt nicht an der Federbewegung des Fahrzeugrades 10 und der Nabenbaugruppe 16 teil, gehört daher auch nicht zu den ungefederten Massen. Die Nabenbaugruppe 16 umfasst eine Radnabe, wobei diese Radnabe das Fahrzeugrad 10 lagert und trägt, so dass das Fahrzeugrad um eine Drehachse 99 rotieren kann.

Beim vorliegenden Ausführungsbeispiel weist die Lenkmotorvorrichtung 6 einen Elektromotor als Lenkmotor 7 auf, der auf ein Untersetzungsgetriebe 8 einwirkt, welches für die zum Verschwenken des Fahrzeugrades 10 erforderlichen großen Drehmomente bereitstellt. Als Untersetzungsgetriebe 8 werden vorzugsweise kompakt bauende Getriebe, wie beispielsweise Wolfrom-Getriebe, Wellgetriebe, Planetengetriebe oder Riemengetriebe verwendet. Am Abtrieb des Untersetzungsgetriebes 8 ist ein Motorschwenkhebel 20 angeordnet, der mittels des Lenkmotors 7 und des Untersetzungsgetriebes 8 um eine Schwenkachse 21 schwenkbar ist. Gegenüber dem Motorschwenkhebel 20 ist auf der Innenseite 19 des Fahrzeugrades 10 an der Nabenbaugruppe 16 ein Radschwenkhebel 22 angeordnet, der um die Lenkachse 11 schwenkbar ist. Der Motorschwenkhebel 20 und der Radschwenkhebel 22 sind im Wesentlichen parallel zueinander angeordnet. Der schwenkbare Endbereich 23 des Motorschwenkhebels 20 ist mit dem schwenkbaren Endbereich 24 des Radschwenkhebels 22 mittels einer Koppelstange 25 verbunden, die an den jeweiligen Endbereich 23, 24 angelenkt ist.

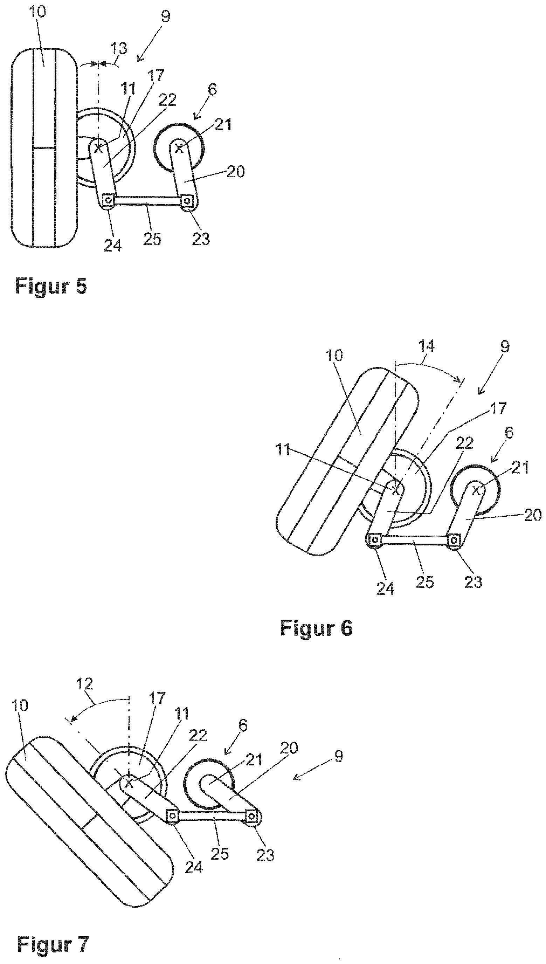

Wie man am besten in den Figuren 5-7 erkennt, führt eine durch die Lenkmotorvorrichtung 6 bewirkte Schwenkung des Motorschwenkhebels 20 über die Koppelstange 25 zu einer entsprechenden Verschwenkung des Radschwenkhebels 22, wodurch das Fahrzeugrad 10 gelenkt wird. Figur 5 zeigt die Situation bei Geradeausfahrt des Fahrzeugs in neutraler Stellung mit einem neutralen Drehwinkel 13 (0°). Figur 6 zeigt die Situation beim Fahren einer Linkskurve, bei dem ein positiver Drehwinkel 14 eingestellt ist. Figur 7 zeigt die Situation beim Fahren einer Rechtskurve, bei der ein negativer Drehwinkel 12 eingestellt ist.

Es ist zweckmäßig, wenn die Koppelstange 25 in den Endbereichen 23, 24 des Motorschwenkhebels 20 und des Radschwenkhebels 22 mittels Kugelgelenken angelenkt ist, um Relativbewegungen des einfedernden Fahrzeugrades 10 gegenüber der fest mit dem Fahrzeugchassis verbundenen Lenkmotorvorrichtung 6 zu ermöglichen. Die beschriebene Radlenkbaugruppe 9 ist mit dem Lenkmotor 7, dem Untersetzungsgetriebe 8, dem Motorschwenkhebel 20, der Koppelstange 25, und dem das Fahrzeugrad 10 schwenkenden und mit der Nabenbaugruppe 16 verbundenen Radschwenkhebel 22 extrem kompakt und einfach aufgebaut und ermöglicht große Drehwinkel 12, 14 von -70° bis +90°. Zudem hat die erfindungsgemäße Radlenkbaugruppe 9 den Vorteil, dass die Lenkmotorvorrichtung 6 mit Lenkmotor 7, Untersetzungsgetriebe 8 und Motorschwenkhebel 20 am Fahrzeugchassis und nicht an der Nabenbaugruppe 16 oder beispielsweise einem zur Aufhängung der Nabenbaugruppe 16 dienenden Querlenker angebracht ist, weil die genannten Bauteile damit nicht zu den ungefederten Massen am Fahrzeugrad 10 gehören. Die ungefederten Massen am Fahrzeugrad 10, insbesondere die Nabenbaugruppe 16 mit Radlager und Radbremse und das Federbein 18 können daher ein wesentlich geringeres Gewicht aufweisen, was bei unebenen Straßen mittels der Federung und Dämpfung das Fahrzeugrad 10 in weit besserem Kontakt zum Untergrund 15 gehalten werden kann. Ganz allgemein hat eine Einzelradlenkung noch den Vorteil, dass damit die Fahrdynamikperformance erhöht werden kann.

## Patentansprüche

1. Radlenkbaugruppe für ein Kraftfahrzeug zur Verschwenkung eines einzelnen lenkbaren Fahrzeugrads (10), das an einem Fahrzeugchassis um eine Lenkachse (11) schwenkbar angeordnet ist, wobei die Radlenkbaugruppe eine einen Lenkmotor (7) aufweisenden Lenkmotorvorrichtung (6) umfasst, mit der das Fahrzeugrad (10) um durch elektrische Steuersignale vorgegebene Drehwinkel (12, 13, 14) um die Lenkachse (11) schwenkbar ist, wobei ein Radschwenkhebel (22) mit dem Fahrzeugrad (10) koppelbar ist, wobei der Radschwenkhebel (22) um die Lenkachse (11) schwenkbar ist, und dass die Lenkmotorvorrichtung (6) am Fahrzeugchassis befestigbar ist und einen Motorschwenkhebel (20) aufweist, der mittels des Lenkmotors (7) um eine Schwenkachse (21) schwenkbar ist, und dass ein schwenkbarer Endbereich (23) des Motorschwenkhebels (20) und ein schwenkbarer Endbereich (24) des Radschwenkhebels (22) mittels einer angelenkten Koppelstange (25) miteinander verbunden sind, sodass eine vom Lenkmotor (7) bewirkte Verschwenkung des Motorschwenkhebels (20) eine Verschwenkung des Radschwenkhebels (22) bewirkt, **dadurch gekennzeichnet, dass** die Koppelstange (25) am Motorschwenkhebel (20) und am Radschwenkhebel (22) jeweils mittels eines Kugelgelenks angelenkt ist.

2. Radlenkbaugruppe nach Anspruch 1, **dadurch gekennzeichnet, dass** die Lenkmotorvorrichtung (6) einen wirkungsmäßig zwischen dem Lenkmotor (7) und dem Motorschwenkhebel (20) angeordnetes Untersetzungsgetriebe (8) aufweist.

3. Radlenkbaugruppe nach Anspruch 2, **dadurch gekennzeichnet, dass** das Untersetzungsgetriebe (8) ein Wolfrom-Getriebe oder ein Wellgetriebe oder ein Riemengetriebe oder ein Planetenradgetriebe ist.

4. Radlenkbaugruppe nach einem der vorhergehenden Ansprüche, **dadurch gekennzeichnet, dass** sich der Motorschwenkhebel (20) und der Radschwenkhebel (22) von ihren jeweiligen Schwenkachsen (11, 21) ausgehend parallel zueinander und bei neutraler Lenkstellung (13) bei Geradeausfahrt des Fahrzeugs in Fahrtrichtung oder entgegen der Fahrtrichtung erstrecken.

## Claims

1. Wheel steering assembly for a motor vehicle for pivoting a single steerable vehicle wheel (10) which is arranged on a vehicle chassis such that it can be pivoted about a steering axis (11), the wheel steering assembly comprising a steering motor apparatus (6) which has a steering motor (7) and by way of which the vehicle wheel (10) can be pivoted about the steering axis (11) by rotation angles (12, 13, 14) which are predefined by way of electric control signals, it being possible for a wheel pivoting lever (22) to be coupled to the vehicle wheel (10), it being possible for the wheel pivoting lever (22) to be pivoted about the steering axis (11), and it being possible for the steering motor apparatus (6) to be fastened to the vehicle chassis, and the said steering motor apparatus (6) comprising a motor pivoting lever (20) which can be pivoted about a pivot axis (21) by means of the steering motor (7), and a pivotable end region (23) of the motor pivoting lever (20) and a pivotable end region (24) of the wheel pivoting lever (22) being connected to one another by means of an articulated coupling rod (25), with the result that a pivoting movement of the motor pivoting lever (20), which pivoting movement is brought about by the pivoting motor (7), brings about a pivoting movement of the wheel pivoting lever (22), **characterized in that** the coupling rod (25) is articulated on the motor pivoting lever (20) and on the wheel pivoting lever (22) in each case by means of a ball joint.

2. Wheel steering assembly according to Claim 1, **characterized in that** the steering motor apparatus (6) comprises a reduction mechanism (8) which is arranged in terms of action between the steering motor (7) and the motor pivoting lever (20).

3. Wheel steering assembly according to Claim 2, **characterized in that** the reduction mechanism (8) is a Wolfrom gear mechanism or a harmonic drive or a belt mechanism or a planetary gear mechanism.

4. Wheel steering assembly according to one of the preceding claims, **characterized in that** the motor pivoting lever (20) and the wheel pivoting lever (22) extend, starting from their respective pivot axes (11, 21), parallel to one another and, in the case of a neutral steering position (13) when the vehicle is driving straight ahead, in the driving direction or counter to the driving direction.

## Revendications

1. Module de contre-rail pour un véhicule automobile destiné à faire pivoter une roue de véhicule individuelle pivotante (10), qui est disposée sur un châssis de véhicule de façon pivotante autour d'un axe de direction (11), dans lequel le module de contre-rail comprend un dispositif de moteur de direction (6) présentant un moteur de direction (7), avec lequel la roue de véhicule (10) peut pivoter autour de l'axe de direction (11) d'un angle de rotation (12, 13, 14) prédéterminé par des signaux de commande électriques, dans lequel un levier de pivotement de roue (22) peut être couplé à la roue de véhicule (10), dans lequel le levier de pivotement de roue (22) peut pivoter autour de l'axe de direction (11), et dans lequel le dispositif de moteur de direction (6) peut être fixé au châssis de véhicule et présente un levier de pivotement de moteur (20), qui peut pivoter autour d'un axe de pivotement (21) au moyen du moteur de direction (7), et dans lequel une région d'extrémité pivotante (23) du levier de pivotement de moteur (20) et une région d'extrémité pivotante (24) du levier de pivotement de roue (22) sont reliées l'une à l'autre au moyen d'une barre de couplage articulée (25), de telle manière qu'un pivotement du levier de pivotement de moteur (20) provoqué par le moteur de direction (7) entraîne un pivotement du levier de pivotement de roue (22), **caractérisé en ce que** la barre de couplage (25) est articulée sur le levier de pivotement de moteur (20) et sur le levier de pivotement de roue (22) chaque fois au moyen d'une articulation à rotule.

2. Module de contre-rail selon la revendication 1, **caractérisé en ce que** le dispositif de moteur de direction (6) présente un engrenage de démultiplication (8) disposé de façon fonctionnelle entre le moteur de direction (7) et le levier de pivotement de moteur (20).

3. Module de contre-rail selon la revendication 2, **caractérisé en ce que** l'engrenage de démultiplication (8) est un engrenage de type Wolfrom ou un engrenage d'entraînement harmonique ou une transmission à courroie ou un engrenage planétaire.

4. Module de contre-rail selon l'une quelconque des revendications précédentes, **caractérisé en ce que** le levier de pivotement de moteur (20) et le levier de pivotement de roue (22) s'étendent à partir de leurs axes de pivotement respectifs (11, 21) parallèlement l'un à l'autre et en position de direction neutre (13) au démarrage du véhicule en ligne droite dans la direction de marche ou à l'inverse de la direction de marche.
